# EUROPEAN PATENT APPLICATION

(11) **EP 4 198 594 A1**
(43) Date of publication of application: **21.06.2023**
(21) Application number: 22212564.3
(22) Date of filing: 09.12.2022
(51) Int. Cl.: G02B 6/44

(54) **LOW WEIGHT OPTICAL FIBER CABLE**

(30) Priority: 15.12.2021 IN 202111058495
(71) Applicant: Sterlite Technologies Limited, 122002 Gurugram, Haryana (IN)
(72) Inventor: Balakrishnan, Jitendra, 122002 Gurugram (IN); Gangwar, Raj, 122002 Gurugram (IN)
(74) Representative: Petraz, Gilberto Luigi

(57) **Abstract**

The present disclosure relates to an optical fiber cable (100) including one or more optical fibers (102), one or more tubular structures (104), a sheath (106) surrounding the one or more tubular structures (104), and a plurality of strength members (108) at least partially embedded in the sheath (106). Each tubular structure (104) has at least one optical fiber. Moreover, the number of the strength members (108) in the optical fiber cable (100) are n+1, where n is an even integer.

## Description

### TECHNICAL FIELD

Embodiments of the present disclosure relate to the field of optical fibers and more particularly, relate to an optical fiber cable with an odd number of strength members.

This application claims the benefit of Indian Application No. 202111058495 titled "LOW WEIGHT OPTICAL FIBER CABLE" filed by the applicant on 15/12/2021, which is incorporated herein by reference in its entirety.

### Background Art

An optical fibre cable plays a pivotal role in today's networking infrastructure. The optical fiber cable carries data faster than conventional copper cables and has complex designs and intensive underground laying procedures. The demand for uninterrupted and high speed internet is consistently paving a way for new design of the optical fiber cable. Over decades, the consistent development in the optical fiber cable industry leads to innovative cable designs that can accommodate more optical fibers within the current limited duct space.

An optical fiber is a mechanically fragile structure. The optical signal transmission characteristics of an optical fiber can substantially degrade if the fiber is mechanically stressed. If a fiber is too severely mechanically stressed, the fiber can become non-functional for purposes of optical signal transmission in a telecommunication application.

It is not uncommon that an optical fiber cable containing an optical fiber or optical fibers will undergo handling or be exposed to a physical environment that can stress the fiber or fibers within the cable. For example, an optical fiber contained in an optical fiber cable can experience stress and strain when the cable is bent or stretched during winding on a reel for purposes of storage, or during or after installation along and over another surface, in a pipe or duct or suspended in air from vertical supports. Also, the fiber in a cable can be mechanically stressed if it is pinched between other cable components and because of the difference between the coefficients of thermal expansion for the optical fiber and the other components in the optical fiber cable containing the fiber.

Patent application WO2019128473A1 shows a cable with three strength members but does not mention about bending stiffness characteristics.

Another patent application EP0227326A2 shows a cable with three strength members but does not mention about bending stiffness characteristics.

Another patent US6459837B1 shows a cable with one strength member but does not mention about bending stiffness characteristics.

In the light of the above stated discussion, there is a need to ameliorate one or more of the aforementioned disadvantages by providing a low weight optical fiber with odd number of strength members.

Nowadays, the optical fiber cable is designed to have a maximum number of optical fibers, to be easy to access and to be easy to tear and cut whenever required. Transmission of data through optical fiber cable depends on the number of strength members embedded inside the optical fiber cable. Overhead cables provide an unobtrusive, convenient and cost-effective way for data transmission for FTTx aerial drop applications. In addition, the overhead cables clamped and hunged between poles during installation. However, the inclusion of robust tensile strength, resistance to breakage and a host of other mechanical features are vital. Further, the strength members are embedded inside the overhead cable sheath. The embedded strength members provide mechanical stability to the overhead cable but resists bending of the overhead cable to some extent. The cable exhibits preferential bending characteristics in case of an even number of strength members embedded symmetrically in the sheath of the cable. The even numbers of strength members makes the overhead cable handling less comfortable.

Therefore, there exists a need for an improved technique which solves the aforesaid drawbacks and to provide a low weight optical fiber cable with an odd number of strength members to increase flexibility and improve handling of the optical fiber cable.

### SUMMARY OF THE DISCLOSURE

Embodiments of the present disclosure provide an optical fiber cable includes one or more optical fibers, one or more tubular structures such that each tubular structure has at least one optical fiber, a sheath surrounding the one or more tubular structures and a plurality of strength members partially embedded in the sheath. In particular, the number of strength members of the plurality of strength members are n+1, where n is an even integer.

In accordance with an embodiment of the present disclosure, no pair of strength members and center of the optical fiber cable are coplanar.

In accordance with an embodiment of the present disclosure ratio of number of tubular structures to number of strength members is less than or equal to 3.

According to the first aspect of the present disclosure, the one or more optical fibers has a diameter of less than or equal to 215um. In particular, the one or more optical fibers have bend loss < 0.3dB at 15mm mandrel for 10 turns.

According to a second aspect of the present disclosure, the optical fiber cable has a preferential bending of less than 2.4, the preferential bending is the ratio of bending stiffness of the cable in any two different bending planes.

According to a third aspect of the present disclosure, the optical fiber cable has a bending stiffness of less than or equal to 0.14Nm²

In accordance with an embodiment of the present disclosure, the one or more tubular structures have a young's modulus of less than 600MPa.

According to a fourth aspect of the present disclosure, the ratio of optical fiber count in the optical fiber cable and the cable outer diameter is greater than 2.

In accordance with an embodiment of the present disclosure, the optical fiber cable has a sag of less than or equal to 2%.

According to a fifth aspect of the present disclosure, each strength member has at least 2 brass plated steel wires stranded together.

The foregoing solutions of the present disclosure are attained by employing a low weight optical fiber cable with an odd number of strength members to increase flexibility and improve handling of the optical fiber cable.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a snapshot illustrating a cross sectional view of an optical fiber cable with one tubular structure embedding one or more optical fibers in accordance with an embodiment of the present disclosure;
Fig. 2 is a snapshot illustrating another cross sectional view of the optical fiber cable with two tubular structures in accordance with an embodiment of the present disclosure;
Fig. 3 is a snapshot illustrating yet another cross sectional view of the optical fiber cable with one or more tubular structures in accordance with an embodiment of the present disclosure.

### REFERENCE LIST

Optical fiber cable 100
one or more optical fibers 102
one or more tubular structures 104
Sheath 106
Plurality of strength members 108

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

Optical fiber cable carries information in the form of data between two places using light technology.

Preferential bending of the optical fiber cable is calculated as the ratio of bending stiffness of the optical fiber cable 100 in any two different bending planes.

Bending stiffness is the resistance of any member against bending deformation. In addition, the bending stiffness is calculated as the ratio of total load to the bending deflection.

Young's modulus is the ratio of uniaxial force per unit surface to the proportional deformation (change in length divided by original length).

FTTx is any broadband network architecture using optical fiber to provide all or part of local loop used for mile telecommunication.

Sag is defined as the vertical difference in level between points of support and the lowest point of the cable sag. In addition, sag is calculated using the formula- S=W*L²/8T, where W is the weight of cable per unit length, L is span length between 2 poles and T is the installation tension.

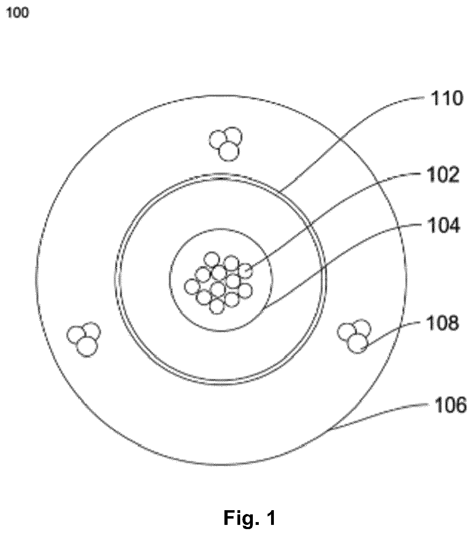

Fig. 1 is a snapshot illustrating a cross sectional view of an optical fiber cable with one tubular structure embedding one or more optical fibers in accordance with an embodiment of the present disclosure. The optical fiber cable 100 includes one or more optical fibers 102, one or more tubular structures 104 and a sheath 106 surrounding the one or more tubular structures 104. In particular, the optical fiber cable 100 includes a plurality of strength members 108 and a water swellable tape 110.

In one aspect, the plurality of strength members 108 is a brass plated steel wire. Alternatively, the plurality of strength members 108 may or may not be a brass plated steel wire.

In accordance with an embodiment of the present disclosure, the one or more optical fibers 102 extend longitudinally along a length of the optical fiber cable 100. In particular, the one or more optical fibers 102 is a fiber used for transmitting information as light pulses from one end to another. In addition, each of the one or more optical fibers 102 is a thin strand of glass or plastic capable of transmitting optical signals. Also, the one or more optical fibers 102 is configured to transmit large amounts of information over long distances with relatively low attenuation. Further, each of the one or more optical fibers 102 includes a core region and a cladding region. The core region is an inner part of an optical fiber and the cladding section is an outer part of the optical fiber. Furthermore, the core region is defined by a central longitudinal axis of each of the one or more optical fibers 102. In addition, the cladding region surrounds the core region.

Particularly, the core region and the cladding region are formed along the central longitudinal axis of each of the one or more optical fibers 102. Moreover, the core region and the cladding region are formed during the manufacturing stage of each of the one or more optical fibers 102. Further, the core region has a refractive index which is greater than a refractive index of the cladding region.

Each of the one or more optical fibers 102 has a diameter of about 200um. Alternatively, the diameter of each of the one or more optical fibers 102 may be 180um, 160um or 140um.

In an aspect, each of the one or more optical fibers 102 is a single mode fiber. Alternatively, each of the one or more optical fibers 102 is a multimode fiber.

In accordance with an embodiment of the present disclosure, each of the one or more tubular structures 104 encloses the one or more optical fibers 102. In an example, each of the one or more tubular structures 104 encloses 12 optical fibers. Moreover, the one or more tubular structures tube 104 may enclose any number of optical fibers. In an aspect, each of the one or more tubular structures 104 surrounds the one or more optical fibers 102. Alternatively, the one or more tubular structures 104 cover the one or more optical fibers 102. Further each of the one or more tubular structures 104 is a tube for encapsulating the one or more optical fibers 102. The one or more tubular structures 104 provide support and protection to each of the one or more optical fibers 102 against crush, bend and stretch. In addition, the one or more tubular structures 104 protect the one or more optical fibers 102 and prevent ingression of water inside. Further, the one or more tubular structures 104 is filled with a water blocking gel.

In accordance with an embodiment of the present disclosure, the sheath 106 surrounds the one or more tubular structures 104. In an aspect, the outer sheath 106 is a high density polyethylene (HDPE) jacket. In particular, the outer sheath 106 is characterized by a thickness. The thickness of the outer sheath 106 is in the range of 1.5mm to 2mm. Alternatively, the thickness of the sheath 106 may vary.

In one aspect, the sheath 106 is black in color. Alternatively, the sheath 106 may be of any color. The sheath 106 layer interacts directly with the ambient environment. In particular, the sheath 106 is a sheathing layer.

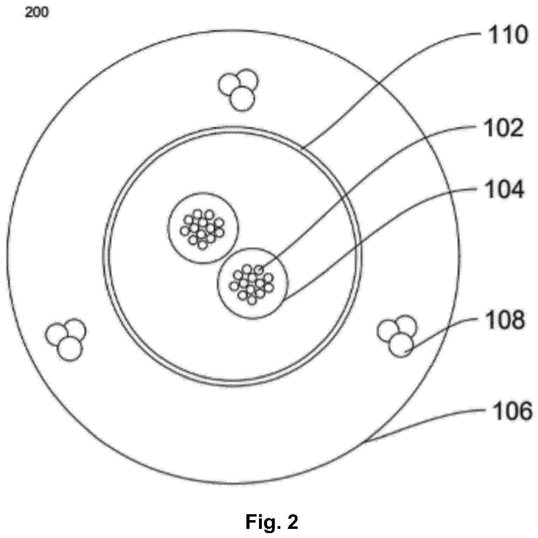

Fig. 2 is a snapshot illustrating another cross sectional view of the optical fiber cable with two tubular structures 104 in accordance with an embodiment of the present disclosure. In particular, the two tubular structures of the one or more tubular structures 104 are such that each of the two tubular structures has at least one optical fiber of the one or more optical fibers 102.

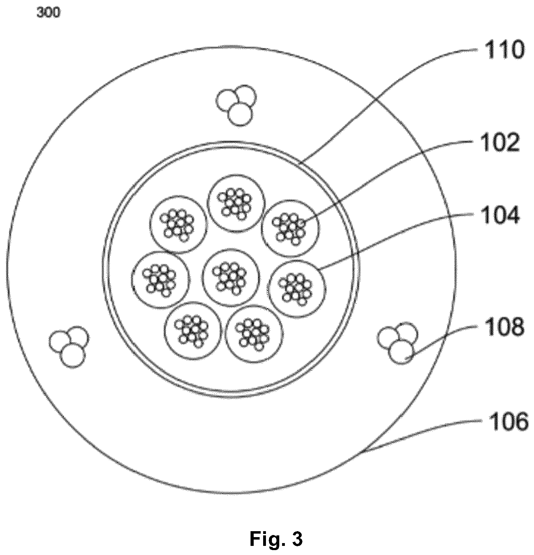

Fig. 3 is a snapshot illustrating yet another cross sectional view of the optical fiber cable with one or more tubular structures in accordance with an embodiment of the present disclosure. In particular, the plurality of tubular structures of the one or more tubular structures 104 are such that each of the plurality of tubular structures has at least one optical fiber of the one or more optical fibers 102. Moreover, the one or more optical fibers 102 are enclosed inside the one or more tubular structures 104. The one or more tubular structures 104 are any of tubes, buffer tubes, loose tubes or micromodules. In addition, the one or more optical fibers 102 inside the optical fiber cable 100 is one of loose fibers, IBRs, flat ribbons and rollable ribbons. Further, the sheath 106 surrounds the one or more tubular structures 104.

In an aspect of the present disclosure, the sheath 106 surrounding the one or more tubular structures 104 is made of polyethylene. Alternatively, the sheath 106 surrounding the one or more tubular structures 104 may or may not be made of polyethylene.

In accordance with an embodiment of the present disclosure, the plurality of strength members 108 is at least partially embedded in the sheath 106. In particular, the strength members help preserve the integrity and separation of components in an optical fiber cable. Moreover, the plurality of strength members 108 provides mechanical stability to the optical fiber cable 100. Further, the plurality of strength members 108 lies substantially along a longitudinal axis of the optical fiber cable 100. In addition, the plurality of strength members 108 provides additional tensile strength to the optical fiber cable 100.

The optical fiber cable 100 includes an odd number of the plurality of strength members 108. In an aspect, the number of the plurality of strength members 108 are defined by n+1, where 'n' is an even integer.

In accordance with an embodiment of the present disclosure, the plurality of strength members 108 are embedded radially and at equal distance from each other. In particular, the partially embedded plurality of strength members 108 allows no pair of strength members and center of the optical fiber cable 100 to be coplanar. In an aspect, the ratio of number of one or more tubular structures 104 to the number of the plurality of strength members 108 is either equal to or less than 3.

In accordance with an embodiment of the present disclosure, the even numbers of the plurality of strength members 108 embedded symmetrically in the sheath 106 of the optical fiber cable 100 forces the optical fiber cable 100 to exhibit preferential bending characteristics. In an aspect, the optical fiber cable 100 has a preferential bending of less than 2.4.

In an example, the bending stiffness of a plane passing through the centre of the cable and the centre of one of the strength member 108 is 0.06Nm² and the bending stiffness of a plane perpendicular to the first plane is 0.14Nm². The preferential bending of the optical fiber cable 100 corresponding to above two planes comes out to be 2. In general, preferential bending refers to the bending of an optical fiber cable only along its longitudinal axis. The optical fiber cable 100 exhibits preferential bending characteristics and handling difficulty when the preferential bending is more than 2.4. The odd number of the plurality of strength members 108 allow non-preferential bending of the optical fiber cable 100. The non-preferential bending of the optical fiber cable 100 allows bending of the optical fiber cable 100 in all directions with lesser stiffness.

In an aspect of the present disclosure, the one or more optical fibers 102 has a diameter of less than or equal to 215um. In another aspect of the present disclosure, the one or more optical fibers 102 have a fiber diameter of 200um. In yet another aspect of the present disclosure, the one or more optical fibers 102 has a fiber diameter any of 180um, 160um or 140um.

In an aspect of the present disclosure, the one or more optical fibers 102 have a bend loss less than 0.3dB at 15mm mandrel for 10 turns. Alternatively, the one or more optical fibers 102 may or may not have a bend loss less than 0.3dB at 15mm mandrel for 10 turns. In an aspect, the optical fiber cable 100 has a maximum bending stiffness of less than or equal to 0.14 Nm². The optical fiber cable 100 becomes stiff and difficult to handle upon when the bending stiffness increases more than 0.14 Nm².

In an aspect, the one or more tubular structures 104 have a young's modulus of less than 600 MPa. Alternatively, the one or more tubular structures 104 may have a different young's modulus. The young's modulus of less than 600 MPa makes the optical fiber cable 100 easily peelable, easy to install and less breakable upon load. The one or more tubular structures 104 are easily peelable tubes.

In accordance with an embodiment of the present disclosure, the ratio of optical fiber count in the optical fiber cable 100 to the outer diameter of the optical fiber cable 100 is greater than 2. The reduction in the ratio of optical fiber count to the outer diameter of the optical fiber cable 100 to less than 2 is not suitable for aerial drop overhead applications. In an aspect, each of the one or more tubular structures 104 has a range of 12 to 24 fibers. Alternatively, each of the one or more tubular structures 104 may have a different number of fibers.

In accordance with an embodiment of the present disclosure, the optical fiber cable 100 is an overhead cable suited to aerial FTTx aerial drop applications. In particular, the overhead cables are clamped and hung between poles during the installation. Further, the overhead cables require inclusion of robust tensile strength and a host of other mechanical features.

In accordance with an embodiment of the present disclosure, the aerial cable has a sag of less than or equal to 2%.

In accordance with an embodiment of the present disclosure, each strength member of the plurality of the strength members 108 has at least 2 wires. Alternatively, each of the plurality of the strength members 108 may have a different number of wires. Each of the plurality of the strength members 108 has at least 2 brass plated steel wires stranded together. Alternatively, each of the plurality of strength members may have different number of brass plated steel wires stranded together. The stranding of 2 brass plated steel wires to make one strength member 108 provides the desired tensile strength to the optical fiber cable 100. A strength member 108 made of 2 stranded brass plated steel wires possesses a breaking load of around 450N while a strength member 108 made of 3 stranded brass plated steel wires possesses a breaking load of around 650N.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100) **characterized in that**:
one or more optical fibers (102);
one or more tubular structures (104) such that each tubular structure has at least one optical fiber;
a sheath (106) surrounding the one or more tubular structures (104); and
a plurality of strength members (108) at least partially embedded in the sheath (106),
wherein the number of strength members of the plurality of strength members (108) are n+1, where n is an even integer.

2. The optical fiber cable (100) as recited in claim 1, wherein no pair of strength members and center of the optical fiber cable (100) are coplanar.

3. The optical fiber cable (100) as recited in claim 1, wherein a ratio of number of tubular structures to number of strength members is less than or equal to 3.

4. The optical fiber cable (100) as recited in claim 1, wherein the one or more optical fibers (102) has a diameter of less than or equal to 215um.

5. The optical fiber cable (100) as recited in claim 5, wherein the one or more optical fibers (102) have bend loss < 0.3dB at 15mm mandrel for 10 turns.

6. The optical fiber cable (100) as recited in claim 1, wherein the optical fiber cable (100) has a preferential bending of less than 2.4, the preferential bending is the ratio of bending stiffness of the cable in any two different bending planes.

7. The optical fiber cable (100) as recited in claim 1, wherein the optical fiber cable (100) has a bending stiffness of less than or equal to 0.14Nm².

8. The optical fiber cable (100) as recited in claim 1, wherein the one or more tubular structures (104) have a young's modulus of less than 600MPa.

9. The optical fiber cable (100) as recited in claim 1, wherein the ratio of optical fiber count in the optical fiber cable (100) and the cable outer diameter is greater than 2.

10. The optical fiber cable (100) as recited in claim 1, wherein the optical fiber cable (100) has a sag of less than or equal to 2%.

11. The optical fiber cable (100) as recited in claim 1, wherein each strength member has at least 2 brass plated steel wires stranded together.

12. The optical fiber cable (100) as recited in claim 1, wherein the core region has a higher refractive index than the cladding region.

13. The optical fiber cable (100) as recited in claim 1, wherein the one or more optical fibers (102) has a diameter of about 200um

14. The optical fiber cable (100) as recited in claim 1, wherein the one or more tubular structures (104) is filled with a water blocking gel.

15. The optical fiber cable (100) as recited in claim 1, wherein the outer sheath 106 is a high density polyethylene (HDPE) jacket.
